# EUROPÄISCHE PATENTSCHRIFT

(11) **EP 1 560 482 B1**
(45) Veröffentlichungstag und Bekanntmachung des Hinweises auf die Patenterteilung: **03.06.2009**
(21) Anmeldenummer: 03810929.4
(22) Anmeldetag: 25.08.2003
(51) Int. Cl.: A01G 3/02, B25G 1/10, B26B 13/12

(54) **GRIFF**
HANDLE
POIGNEE

(30) Priorität: 11.11.2002 CH 188302
(43) Veröffentlichungstag der Anmeldung: 10.08.2005
(73) Patentinhaber: Alber, Alfons, 39010 Vöran (IT); Kuhn, Günther, 39012 Meran (IT)
(72) Erfinder: Alber, Alfons, 39010 Vöran (IT); Kuhn, Günther, 39012 Meran (IT)
(74) Vertreter: Dilg, Andreas
(86) Internationale Anmeldenummer: PCT/CH2003/000572
(87) Internationale Veröffentlichungsnummer: WO 2004/043137

(56) Entgegenhaltungen:
- WO-A-01/05560
- US-A- 5 275 068
- US-B1- 6 216 780
- US-B1- 6 360 928

## Beschreibung

Die vorliegende Erfindung ist ein Griff gemäß den Patentansprüchen 1-14, sowie ein Werkzeug gemäß Anspruch 15.

Heutiger Stand : Beim Gebrauch von Scheren und Werkzeugen fallen diese oft aus der Hand und zudem schränkt das Halten von Gebrauchsgegenständen die Bewegungsfreiheit der Hände ein. Ferner ist aus WO 01/05560 ein Griff eines Handwerkzeuges bekannt, welches durch Minimum einen offenen oder geschlossenenringförmiger Körper gekennzeichnet ist, der fest oder federnd nachgiebig ausgebildet ist zur Halterung mit einem Finger, sowie Mittel zur Befestigung eines festen oder auswechselbaren Werkzeuges.

Durch diese Erfindung wird das Problem wie folgt gelöst : Die Grundidee der vorliegenden Erfindung liegt darin, dass verschiedene Werkzeuge verbunden mit dem Griff an verschiedenen Körperteilen, wie Finger, Hände, Arme oder Beine befestigt werden kann. Durch diese Befestigung werden die verschiedenen Gebrauchsgegenstände festgehalten ohne die Bewegungsfreiheit von Händen, Armen und Beinen einzuschränken. Das aus der Hand Fallen von verschiedenen Werkzeugen wird durch diesen Griff unterbunden. Aus diesem Griff können verschiedene Werkzeuge aufgebaut werden, die zusätzliche Betätigungshebel aufweisen.

Im vorliegenden Fall handelt es sich um ein Griffstück (5), das abgewinkelt und mit einem Fixationselement (4) verbunden ist. Auf diesem Griffstück werden verschiedene Werkzeuge (6) aufgebaut und so an Finger, Hände, Arme oder Beine fixiert.

In den Zeichnungen sind Abbildungen von Griffen mit möglichen Werkzeugen.

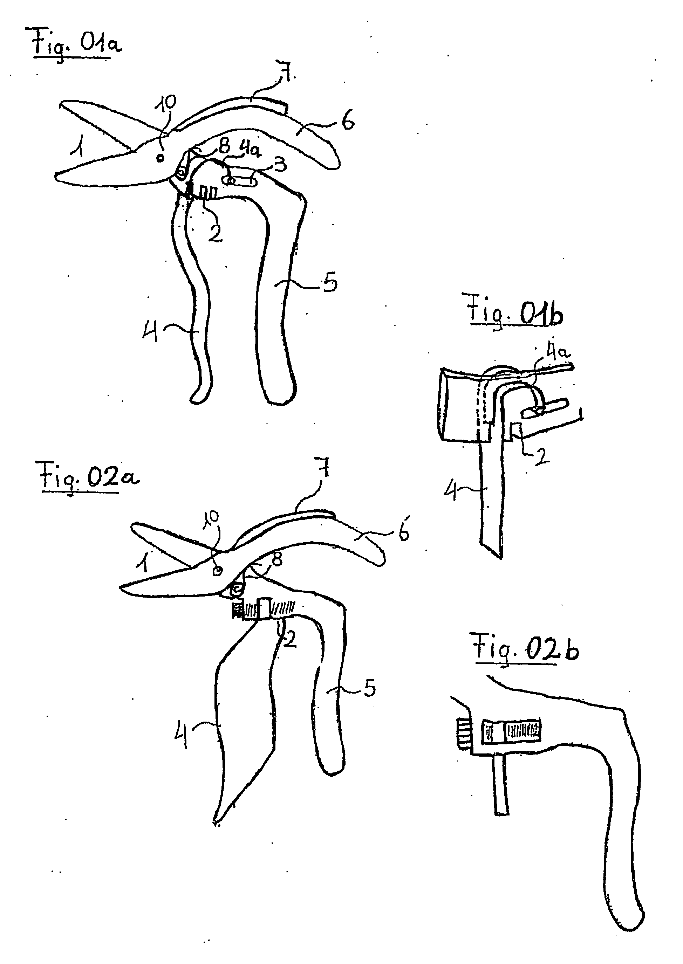

FIGUR 01a : Abgewinkelter Griff (5) mit Aussparrungen auf der Unterseite (Öffnungen Verankerungen von Fixationsmittel (4) mit aufgebauter Schere (1).

FIGUR 02a : Abgewinkelter Griff (5) mit auf der Unterseite stufenloser Versetzung (2) der Fixationsmittel (4).

FIGUR 02b : Stufenlose Versetzung (2) der Fixationsmittel (4).

## Patentansprüche

1. Griff, aufweisend
ein abgewinkeltes Griffstück (5);
mindestens ein Fixationselement (4);
wobei das mindestens eine Fixationselement (4) mit der Unterseite des abgewinkelten Griffstücks (5) unverlierbar verbunden ist; und
wobei der Griff zum festen oder auswechselbaren Verankern von mindestens einem Werkzeug (6) eingerichtet ist:
**dadurch gekennzeichnet dass** Abstände zwischen dem abgewinkelten Griffstücks (5) und em mindestens einen Fixationselement (4) einstellbar sind.

2. Griff nach Anspruch 1,
wobei das abgewinkelte Griffstück (5) und das mindestens eine Fixationselement (4) fest miteinander verbunden sind.

3. Griff nach Anspruch 1 oder 2,
aufweisend ein Zugmittel (4a);
wobei die Abstände zwischen dem abgewinkelten Griffstück (5) und dem mindestens einen Fixationselement (4) stufenweise veränderbar sind;
wobei die Unverlierbarkeit des mindestens einen Fixationselements (4) mittels des Zugmittels (4a) realisiert ist.

4. Griff nach Anspruch 1 oder 2,
wobei die Abstände zwischen dem abgewinkelten Griffstück (5) und dem mindestens einen Fixationselement (4) stufenlos veränderbar sind.

5. Griff nach einem der Ansprüche 1 bis 4,
wobei das abgewinkelte Griffstück (5) und das mindestens eine Fixationselement (4) aus verformbarem Werkstoff hergestellt sind und fest miteinander verbunden sind.

6. Griff nach einem der Ansprüche 1 bis 5,
wobei das abgewinkelte Griffstück (5) und das mindestens eine Fixationselement (4) verschiedene Durchmesser aufweisen.

7. Griff nach einem der Ansprüche 1 bis 6,
hergestellt aus verschiedenen Werkstoffen, die mit verformbarem Material überzogen sind.

8. Griff nach einem der Ansprüche 1 bis 7,
bei dem als an dem Griff verankertes Werkzeug (6) eine Schere (1), ein Betätigungshebel mit Abstreifkante (7), ein fester Drehpunkt (10) und Rückholmittel (8) vorgesehen sind.

9. Griff nach einem der Ansprüche 1 bis 8,
eingerichtet zum fest auswechselbaren oder beweglichen Verbinden verschiedener Gegenstände.

10. Griff nach einem der Ansprüche 1 bis 9,
aufweisend Aussparungen (2) an der Unterseite des abgewinkelten Griffstücks (5);
wobei das mindestens eine Fixationselement (4) mittels der Aussparungen (2) mit der Unterseite des abgewinkelten Griffstücks (5) verbunden ist.

11. Griff nach einem der Ansprüche 1 bis 10,
aufweisend einen Drehknopf;
wobei die Abstände zwischen dem abgewinkelten Griffstück (5) und dem mindestens einen Fixationselement (4) mittels des Drehknopfs stufenlos veränderbar sind.

12. Griff nach einem der Ansprüche 1 bis 11,
wobei mittels Einstellens der Abstände zwischen dem abgewinkelten Griffstück (5) und dem mindestens einen Fixationselement (4) ein zwischen dem abgewinkelten Griffstück (5) und dem mindestens einen Fixationselement (4) angeordnetes Körperteil fest fixierbar ist;

13. Griff nach Anspruch 12,
eingerichtet zum festen Fixieren von mindestens einem Köperteil aus der Gruppe bestehend aus einem Finger, einer Hand, einem Arm und einem Bein.

14. Griff nach Anspruch 12 oder 13,
wobei das mindestens eine Fixationselement (4) derart geformt ist, dass es das Körperteil schützt.

15. Werkzeug-Anordnung, aufweisend
einen Griff nach einem der Ansprüche 1 bis 14;
ein Werkzeug (6), das an dem Griff befestigt oder befestigbar ist.

## Claims

1. A grip, comprising
an angled handle (5),
at least one fixation element (4),
wherein the at least one fixation element (4) is unloseable connected with a bottom part of the angled handle (5), and
wherein the grip is adapted for firm and exchangeable coupling with an at least one tool (6),
**characterized in that** distances between the angled handle (5) and the at least one fixation element (4) are adjustable.

2. The grip according to claim 1,
wherein the angled handle (5) and the at least one fixation element (4) are firmly connected to each other.

3. The grip according to claims 1 or 2, comprising
a pulling means (4a),
wherein distances between the angled handle (5) and the at least one fixation element (4) are adjustable in steps,
wherein the unlosability of the at least one fixation element (4) is realized by way of the pulling means (4a).

4. The grip according to claims 1 or 2,
wherein distances between the angled handle (5) and the at least one fixation element (4) are steplessly adjustable.

5. The grip according to anyone of claims 1 to 4,
wherein the angled handle (5) and the at least one fixation element (4) are produced from a deformable material and are firmly connected to each other.

6. The grip according to anyone to claims 1 to 5,
wherein the angled handle (5) and the at least one fixation element (4) comprise different diameters.

7. The grip according to anyone of claims 1 to 6,
produced from different materials which are covered by deformable material.

8. The grip according to anyone of claims 1 to 7,
at which a shear (1), an operation lever having a striking-of edge (7), a fixed pivoting point (10) and a retracting element (8) are provided as tool (6) coupled to the grip.

9. The grip according to anyone of claims 1 to 8,
adapted for a fixedly replaceable or movable connection with different subjects.

10. The grip according to anyone of claims 1 to 9, comprising
recesses (2) at the bottom part of the angled handle (5),
wherein the at least one fixation element (4) is connected with the bottom part of the angled handle (5) by way of the recesses (2).

11. Grip according to anyone of claims 1 to 10, comprising
a turning knob,
wherein distances between the angled handle (5) and the at least one fixation element (4) are steplessly adjustable by way of the turning knob.

12. The grip according to anyone of claims 1 to 11,
wherein by way of adjusting the distances between the angled handle (5) and the at least one fixation element (4), a body part located between the angled handle (5) and the at least one fixation element (4) is firmly fixable.

13. The grip according to claim 12,
adapted for firm fixation of at least one body part from a group consisting of a finger, a hand, an arm or a leg.

14. Grip according to claims 12 or 13,
wherein the at least one fixation element (4) is formed so that the body part is protected.

15. Tool assembly comprising
a grip according to anyone of claims 1 to 14,
a tool (6), which is mounted at the grip or is mountable at the grip.

## Revendications

1. Manche comportant
une poignée coudée (5) ;
au moins un élément de fixation (4) ;
le au moins un élément de fixation (4) étant assemblé de manière imperdable avec le côté inférieur de la poignée coudée (5) ; et
le manche étant conçu pour l'ancrage fixe ou interchangeable d'au moins un outil (6) ;
**caractérisé en ce que** les distances entre la poignée coudée (5) et le au moins un élément de fixation (4) sont réglables.

2. Manche suivant la revendication 1, dans lequel la poignée coudée (5) et le au moins un élément de fixation (4) sont assemblés fixement entre eux.

3. Manche suivant l'une des revendications 1 et 2, comportant un moyen de traction (4a), manche dans lequel
les distances entre la poignée coudée (5) et le au moins un élément de fixation (4) sont modifiables progressi-vement;
le caractère imperdable de le au moins un élément de fixation (4) est réalisé à l'aide du moyen de traction (4a).

4. Manche suivant l'une des revendications 1 et 2, dans lequel les distances entre la poignée coudée (5) et le au moins un élément de fixation (4) sont modifiables en continu.

5. Manche suivant l'une des revendications 1 à 4, dans lequel la poignée coudée (5) et le au moins un élément de fixation (4) sont fabriqués en un matériau déformable et sont assemblés fixement entre eux.

6. Manche suivant l'une des revendications 1 à 5, dans lequel la poignée coudée (5) et le au moins un élément de fixation (4) présentent des diamètres différents.

7. Manche suivant l'une des revendications 1 à 6, fabriqué en matériaux différents revêtus du matériau déformable.

8. Manche suivant l'une des revendications 1 à 7, dans lequel sont prévus des ciseaux (1) en tant qu'outil (6) ancré sur le manche, un levier d'actionnement avec arête d'enlèvement (7), un pivot fixe (10) et des moyens de rappel (8).

9. Manche suivant l'une des revendications 1 à 8, conçu pour l'assemblage fixe interchangeable ou mobile de différents objets.

10. Manche suivant l'une des revendications 1 à 9, comportant des évidements (2) sur le côté inférieur de la poignée coudée (5) ; manche dans lequel
le au moins un élément de fixation (4) est assemblé au moyen des évidements (2) avec le côté inférieur de la poignée coudée (5).

11. Manche suivant l'une des revendications 1 à 10, comportant un bouton tournant ; manche dans lequel
les distances entre la poignée coudée (5) et le au moins un élément de fixation (4) sont modifiables en continu au moyen du bouton tournant.

12. Manche suivant l'une des revendications 1 à 11, dans lequel une partie du corps, disposée entre la poignée coudée (5) et le au moins un élément de fixation (4), peut être fixée de manière fixe au moyen du réglage des distances entre la poignée coudée (5) et le au moins un élément de fixation (4).

13. Manche suivant la revendication 12, conçu pour la fixation fixe d'au moins une partie du corps constituée du groupe d'un doigt, d'une main, d'un bras et d'une jambe.

14. Manche suivant l'une des revendications 12 et 13, dans lequel le au moins un élément de fixation (4) est formé de telle sorte qu'il protège la partie du corps.

15. Agencement d'outil comportant
un manche suivant l'une des revendications 1 à 14 ;
un outil (6), fixé ou pouvant être fixé sur le manche.
